# EUROPÄISCHE PATENTANMELDUNG

(11) **EP 2 068 092 A2**
(43) Veröffentlichungstag der Anmeldung: **10.06.2009**
(21) Anmeldenummer: 08018359.3
(22) Anmeldetag: 21.10.2008
(51) Int. Cl.: F24H 1/20

(54) **Brennwertkammer eines Speicherkessels einer Heizanlage**

(30) Priorität: 07.12.2007 DE 102007059425
(71) Anmelder: Carl Capito Heiztechnik GmbH, 57290 Neunkirchen (DE)
(72) Erfinder: Von Gradowski, Bernhard, 57520 Friedewald (DE)
(74) Vertreter: Grosse, Wolf-Dietrich Rüdiger

(57) **Zusammenfassung**

Die Erfindung betrifft eine Brennwertkammer, die zum Erhitzen von zugeleitetem Wasser gas- oder ölbefeuert ist, eines Speicherkessels einer Heizanlage.

Eine verbesserte Brennwertkammer (2) wird dadurch erreicht, dass diese mit in ihrem Gehäuse (3) angeordneten, umfangsgeschlossenen, von dem Kesselwasser vertikal durchströmten Wärmetauscherrohren (9 a, 9 b) ausgebildet ist.

## Beschreibung

Die Erfindung betrifft eine Brennwertkammer, die zum Erhitzen von zugeleitetem Wasser gas- oder ölbefeuert ist, eines Speicherkessels einer Heizanlage.

Durch die EP 1 411 312 B1 ist eine Heizanlage bekannt geworden, die im Pufferbetrieb mit einem eine Brennkammer enthaltenden Pufferkesselspeicher oder im Schichtungsbetrieb, beispielsweise unter Nutzung von Solarenergie mit einem Kombispeicherkessel arbeiten kann. In jedem Fall vereint der Speicherkessel mehrere Kreisläufe, wie einen Solarkreislauf, einen Wasch- und Duschwasserkreislauf und eine Versorgung einer Heizung mit Anschlüssen für Vor- und Rücklauf. Zur Optimierung der Solarenergienutzung und schnellen Bereitstellung warmen bzw. heißen Brauchwassers, insbesondere im höchsten Punkt des Speicherkessels, ist in dem Kessel ein an dessen Innendurchmesser angepasster, rondenförmiger Schichtungsstabilisator aus einem gut wärme-isolierenden Material eingesetzt. Der Schichtungsstabilisator befindet sich im unteren Bereich des Speicherkessels und unterteilt diesen in einen kleineren, unteren Kesselraum und einen demgegenüber sehr viel größeren, oberen Puffer-Kesselraum. Zum Austausch des im unteren, kleineren Kesselraums schnell aufgeheizten Wassers gegen das im oberen Kesselraum befindliche kalte Wasser sind nahe am Außenumfang des rondenförmigen Schichtungsstabilisators einander in einer Ebene gegenüberliegend ein Steigrohr und ein Fallrohr angeordnet.

Die im Handel für solche Speicher- bzw. Heizkessel erhältlichen Brennwertkessel erfordern eine wassergekühlte Brennkammer mit einer hochwirksamen Wärmedämmung und eine nach dem Gegenstromprinzip arbeitende, gezielte Wasserführung sowie außerdem Rücklaufstutzen zur hydraulischen Anbindung.

Der Erfindung liegt daher die Aufgabe zugrunde, für einen Speicher- bzw. Heizkessel eine einfach bauende, dabei gleichwohl äußerst leistungsfähige, kompakte und betriebssicherere Brennwertkammer zu schaffen.

Diese Aufgabe wird erfindungsgemäß dadurch gelöst, dass die Brennwertkammer mit in ihrem Gehäuse angeordneten, umfangsgeschlossenen, von dem in den Kessel zugeleiteten Wasser vertikal durchströmten Wärmetauscherrohren ausgebildet ist. Abweichend von den bekannten horizontalen Wasserführungsrohren lässt sich hierdurch erreichen, dass keine Mindest-Umwälzwassermenge benötigt wird, so dass auf zusätzliche Umwälzpumpen verzichtet werden kann, weil das erwärmte Wasser selbsttätig aufsteigt und sich mit Zirkulation bzw. Schichtung gegen das nach unten fallende Wasser austauscht. Außerdem ist die Wasseraufheizung insbesondere selbst regulierend und kommt auch bei Überlast ohne Hilfsmittel aus. Denn das Wasser erwärmt sich umso schneller, je mehr Leistung eingebracht wird, womit die Auftriebskräfte entsprechend größer werden und eine schnellere Schichtung mit Austausch des heißen Wassers gegen kaltes Wasser einhergeht. Es liegt damit ein hochleistungsfähiges, kompaktes Kraftpaket vor. Aufgrund der vertikalen Anordnung der Abgas-Wärmetauscherrohre lassen sich große thermische Leistungen aus einer kleinen, kompakten Brennkammer in Brennwertausführung auf das Pufferwasser übertragen.

Nach einer bevorzugten Ausführung der Erfindung ist eine vom Brenneranschluss her gesehen vordere Rohreinheit mit U-förmiger Anordnung der Wärmetauscherrohre ausgebildet und weist eine sich daran anschließende hintere Rohreinheit in Reihen neben- und hintereinander zu einem Paket angeordnete Wärmetauscherrohre auf. Durch die seitlichen Wärmetauscherrohre der U-förmigen Anordnung wird erreicht, dass aus der in diesem vorderen Bereich wirkenden Kernflamme die Energie aufgrund der behutsamen Abkühlung der Flamme durch die seitlichen Wärmetauscherröhrchen sanft entnommen werden kann. Damit lassen sich Stickoxide und Kohlenmonoxide weitestgehend verhindern. Die die U-Form vom Brenner entfernt vervollständigenden Wärmetauscherrohre schützen die dahinter angeordnete Rohreinheit der dort in Paketform angeordneten Wärmetauscherrohre. Diese sind der Flamme somit nicht direkt ausgesetzt und können die abströmenden Abgase bis unter Taupunkttemperatur abkühlen, womit sich ein äußerst schadstoffarmer Kesselbetrieb mit hohem Wirkungsgrad gewährleisten lässt.

Dieses einerseits sanfte Entkoppeln von Energie aus der Flamme im vorderen Bereich und andererseits die gleichzeitige schnelle Kühlung der Abgase im hinteren Bereich der Brennwertkammer wird dadurch entscheidend weiter begünstigt, wenn nach einem Vorschlag der Erfindung die vordere Rohreinheit aus außen glatten und die hintere Rohreinheit aus außen gerippten bzw. gewellten Wärmetauscherrohren besteht. Die größere Oberfläche der gerippten bzw. gewellten Röhrchen der hinteren Rohreinheit bietet eine noch schnellere Herunterkühlung in diesem hinteren Bereich der Brennwertkammer.

Eine Ausgestaltung der Erfindung sieht vor, dass die Brennwertkammer ausgehend vom Brenneranschluss mit Neigung in den Heizkessel eingebaut ist. Damit kann das in der Brennwertkammer anfallende Kondensat besser abfließen.

Nach einem weiteren Vorschlag der Erfindung lässt sich die Brennwertkammer bodenseitig auf einer geneigten Speicherkesselronde anordnen, die die Brennwertkammer als Bodenblech-abstützt. Alternativ lässt sich die einfachstenfalls als rechteckiges Gehäuse, vorzugsweise wie die Wärmetauscherrohre hergestellt aus Edelstahl, ausgebildete Brennwertkammer in einander gegenüberliegende Wandausschnitte des Heizkessels einschieben und festlegen.

Weitere Einzelheiten und Merkmale der Erfindung ergeben sich aus den Ansprüchen und der nachfolgenden Beschreibung von in den Zeichnungen dargestellten Ausführungsbeispielen der Erfindung. Es zeigen:
- Fig. 1: als Einzelheit eines Heizkessels dessen mittleren Bereich mit einer darin angeordneten Brennwertkammer, die in ihrem Inneren mit Wärmetauscherrohren zur vertikalen Wasserdurchströmung ausgebildet ist, in einer schematischen Seitenansicht dargestellt;
- Fig. 2: den Gegenstand der Fig. 1 von oben gesehen in einem Schnitt entlang der Linie III - III;
- Fig. 3: die Einzelheit der Fig. 2 in einer Vorderseitenansicht; und
- Fig. 4: eine Gesamtansicht eines Heizkessels, der eine Brennwertkammer gemäß Fig. 1 bis 3 aufweist.

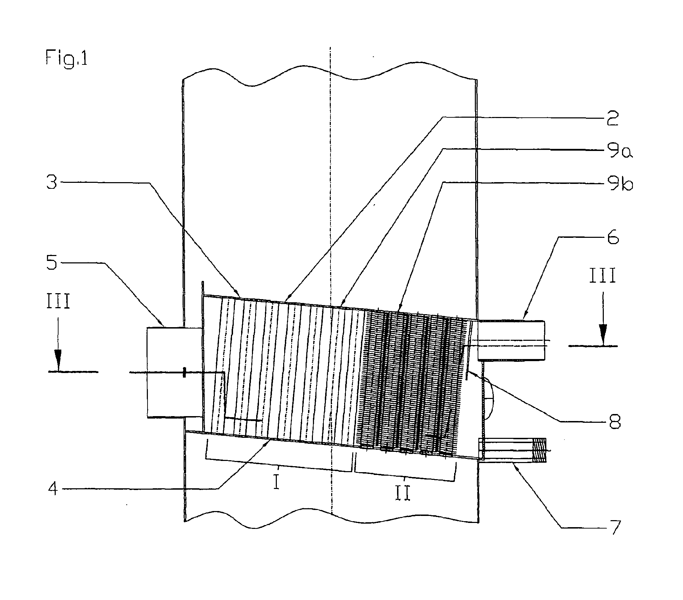

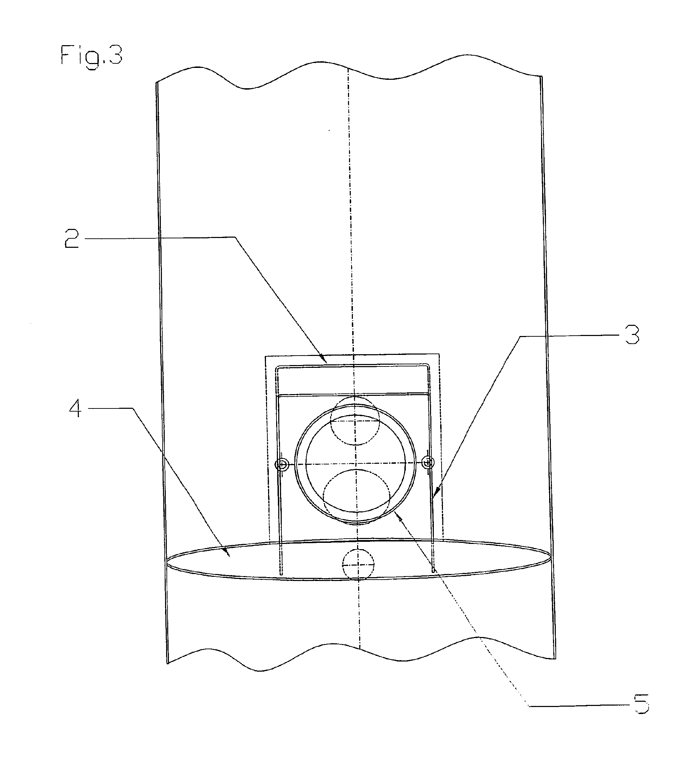

Ein in den Figuren 1 bis 3 ausschnittsweise gezeigter Speicherkessel 1 einer weiter nicht dargestellten Heizanlage ist mit einer Brennwertkammer 2 ausgerüstet, die hier aus einem rechteckigen Gehäuse 3 besteht und bodenseitig auf einer Speicherkesselronde 4 aufliegt. Die Brennwertkammer 2 ragt mit einem an ihrem vorderen Ende vorgesehenen Rundrahmen-Brenneranschluss 5, in den ein Öl- oder Gasbrenner eingesetzt werden kann, aus der Kesselwandung hervor. An dem von dem Brenneranschluss 5 entfernten hinteren Ende der Brennwertkammer 2 ragt sie mit einem Anschlussstutzen 6 zum Schornstein und einem darunter angeordneten Kondensatablauf 7 aus der Kesselwandung vor. Dem Anschlussstutzen 6 ist im Inneren des Speicherkessels 1 ein Prallblech 8 (vgl. Fig. 1) vorgeschaltet. Die Brennwertkammer 2 ist vom vorderen bis zum hinteren Ende geneigt auf der entsprechend schräg verlaufenden Speicherkesselronde 4 angeordnet.

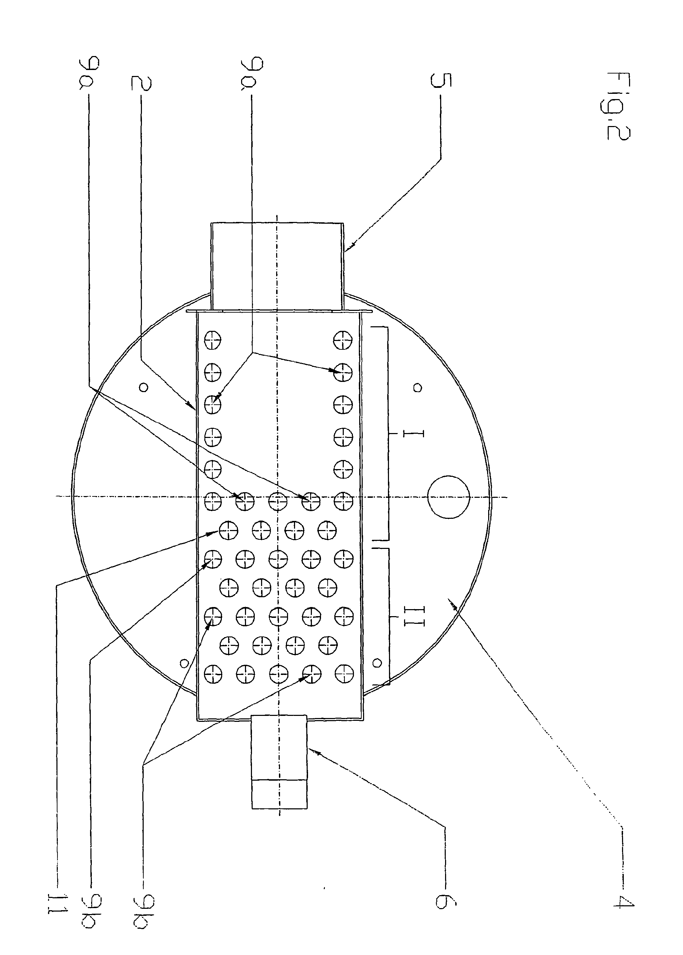

Die Brennwertkammer 2 ist mit zahlreichen Wärmetauscherrohren 9a bzw. 9b bestückt, die umfangsgeschlossen und von dem aufzuheizenden Wasser vertikal durchströmbar angeordnet sind. Die Wärmetauscherrohre bzw. -röhrchen 9a besitzen eine außen glatte Mantelfläche und die Wärmetauscherrohre bzw. - röhrchen 9b besitzen eine außen gerippte bzw. gewellte Mantelfläche. Die glatten Wärmetauscherrohre 9a sind zu einer vorderen Rohreinheit I in U-Form mit zum Brenneranschluss 5 offenem "U" angeordnet, während die gewellten bzw. gerippten Wärmetauscherrohre 9b zu einer paketförmigen hinteren Rohreinheit II ausgebildet sind (vgl. Fig. 2). Durch die Anordnung der Abgasrohre der vorderen Rohreinheit in U-Form ist eine thermische Überlastung der Brennkammer 2 nicht möglich. Da die Abgasrohre in U-Form und vertikal angeordnet sind, ist nur eine kleine Minderwassermenge erforderlich, was eine einfache und kostengünstige Anbindung ermöglicht.

Die die Flansche der U-Anordnung definierenden seitlichen Wärmetauscherrohre 9a der vorderen Rohreinheit I tangieren die Flamme eines in den Brenneranschluss 5 eingesetzten Brenners und entziehen dieser mit gleichzeitiger behutsamer Kühlung der Flamme die Energie, die somit sanft entkoppelt wird. Die den Steg der U-Form-Anordnung definierenden, an die hintere Rohreinheit II angrenzenden Wärmetauscherrohre 9a der vorderen Rohreinheit I verhindern, dass die Wärmetauscherrohre 9b der hinteren Rohreinheit II der Brennerflamme direkt ausgesetzt sind. Im Ausführungsbeispiel ist den den U-Steg definierenden Wärmetauscherrohren 9a noch eine weitere und somit der hinteren Rohreinheit II zusätzlich vorgelagerte Reihe 11 mit glatten Wärmetauscherrohren 9a nachgeschaltet (vgl. Fig. 2).

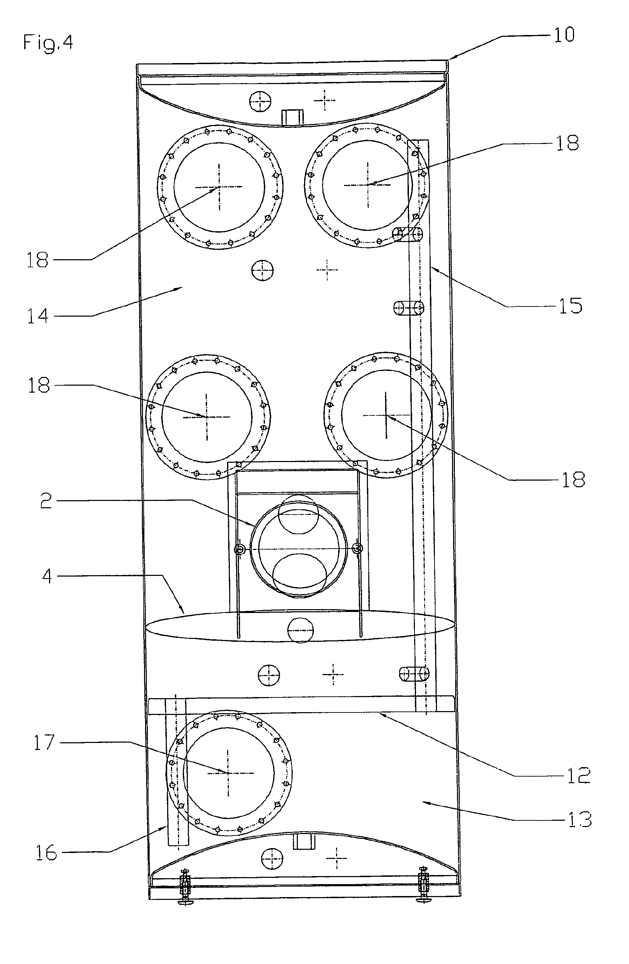

Die Fig. 4 zeigt die in einen Kombispeicherkessel 10, wie durch die eingangs genannte Druckschrift bekannt geworden, eingebaute Brennwertkammer 2 der vorbeschriebenen Bauweise mit Auflage auf einer Speicherkesselronde 4. Der Kombispeicherkessel 10 ist durch einen rondenförmigen Schichtungsstabilisator 12 in einen kleinen, unteren Kesselraum 13 und einen demgegenüber sehr viel größeren, oberen Puffer-Kesselraum 14 unterteilt. Der untere und obere Kesselraum 13, 14 stehen zum schichtenden Wasseraustausch über ein Steigrohr 15 und ein Fallrohr 16 in Strömungsverbindung. Im Bereich des unteren Kesselraums 13 ist ein Halsstutzen 17 für einen darin einzubauenden Solar-Wärmetauscher und über die Höhe des oberen Kesselraums 14 sind verteilt weitere Halsstutzen 18 für Wärmetauscher vorgesehen, die nicht dargestellte Anschlüsse für die Wasserkreisläufe der einzelnen Verbraucher aufweisen, wie für Trinkwasser, Wasch- und Duschwasser oder Heizungswasser.

Beim Einbau der Brennwertkammer 2 in einen solchen Kombispeicherkessel 10 lassen sich verschiedene Betriebsweisen in einem Gerät vereinen, und zwar wahlweise eine Trinkwassererwärmung im Durchflussbetrieb, beispielsweise mit Solarenergieeinbindung als reiner Pufferspeicher oder als Heizkessel in Brennwertausführung, wenn keine Solarenergie zur Verfügung steht.

### Bezugszeichenliste

- 1: Speicherkessel
- 2: Brennwertkammer
- 3: Brennwertkammer-Gehäuse
- 4: Speicherkesselronde
- 5: Brenneranschluss
- 6: Abgasanschlussstutzen
- 7: Kondensatablauf
- 8: Abgasprallblech
- 9a, b: Wärmetauscherrohre
- 10: Kombispeicherkessel
- 11: Abgaswärmetauscher-Rohrreihe
- 12: Schichtungsstabilisator
- 13: unterer Kesselraum
- 14: oberer Kesselraum
- 15: Steigrohr
- 16: Fallrohr
- 17: Halsstutzen
- 18: Halsstutzen

- I: vordere Abgasrohreinheit
- II: hintere Abgasrohreinheit

## Patentansprüche

1. Brennwertkammer, die zum Erhitzen von zugeleitetem Wasser gas- oder ölbefeuert ist, eines Speicherkessels einer Heizanlage,
**dadurch gekennzeichnet,**
**dass** die Brennwertkammer (2) mit in ihrem Gehäuse (3) angeordneten, umfangsgeschlossenen, von dem Kesselwasser vertikal durchströmten Abgaswärmetauscherrohren (9a; 9b) ausgebildet ist.

2. Speicherkessel nach Anspruch 1,
**gekennzeichnet durch**
eine vom Brenneranschluss (5) her gesehen vordere, mit U-förmiger Anordnung der Wärmetauscherrohre (9a) ausgebildete Abgasrohreinheit (I) und eine sich daran anschließende hintere Abgasrohreinheit (II), die in Reihen neben- und hintereinander zu einem Paket angeordnete Wärmetauscherrohre (9b) aufweist.

3. Speicherkessel nach Anspruch 2,
**dadurch gekennzeichnet,**
**dass** die vordere Rohreinheit (I) aus außen glatten und die hintere Rohreinheit (II) aus außen gerippten bzw. gewellten Wärmetauscherrohren (9a; 9b) besteht.

4. Speicherkessel nach einem der Ansprüche 1 bis 3,
**dadurch gekennzeichnet,**
**dass** die Brennwertkammer (2) ausgehend vom Brenneranschluss (5) mit Neigung eingebaut ist.

5. Speicherkessel nach Anspruch 4,
**dadurch gekennzeichnet,**
**dass** die Brennwertkammer (2) bodenseitig auf einer geneigten Speicherkesselronde (4) angeordnet ist.

6. Speicherkessel nach einem der Ansprüche 1 bis 5,
**dadurch gekennzeichnet,**
**dass** die Brennwertkammer (2) und die Wärmetauscherrohre (9a; 9b) aus Edelstahl gefertigt sind.
